# EUROPEAN PATENT APPLICATION

(11) **EP 4 840 988 A1**
(43) Date of publication of application: **18.11.2026**
(21) Application number: 25760977.6
(22) Date of filing: 25.02.2025
(51) Int. Cl.: C25B 1/02, B01D 53/32, B01J 31/08, C01B 3/00, C01B 32/50, C02F 1/469, C25B 9/00, C25B 9/23, C25B 13/04, C25B 13/08

(54) **ELECTROCHEMICAL CELL**

(30) Priority: 01.03.2024 JP 2024031708
(71) Applicant: GS Yuasa International Ltd., Kisshoin, Minami-ku, Kyoto-shi, Kyoto 601-8520 (JP)
(72) Inventor: MIZUNO, Masaki, Kyoto-shi, Kyoto 601-8520 (JP); NISHIYAMA, Hiromichi, Kyoto-shi, Kyoto 601-8520 (JP)
(74) Representative: Isarpatent
(86) International application number: PCT/JP2025/006354
(87) International publication number: WO 2025/182896

(57) **Abstract**

An electrochemical cell includes: a first anode or an anode chamber configured to generate protons; a first cathode or a cathode chamber, the cathode chamber being configured to generate hydroxide ions; and a plurality of electrolyte units disposed between the first anode or the anode chamber and the first cathode or the cathode chamber, in which each of the plurality of electrolyte units includes an electrolyte membrane, and a first liquid chamber arranged on a side of the first anode or the anode chamber and a second liquid chamber arranged on a side of the first cathode or the cathode chamber with the electrolyte membrane interposed therebetween, the plurality of electrolyte units are arranged with a porous conductive layer interposed therebetween, and the porous conductive layer is provided with a catalyst layer on both surfaces.

## Description

### TECHNICAL FIELD

The present invention relates to an electrochemical cell.

### BACKGROUND ART

Patent Literature 1 discloses an electrodialysis device in which bipolar membranes and anion exchange membranes are alternately arranged between a positive electrode and a negative electrode, and a plurality of acid chambers and alkali chambers arranged adjacent to each other with the anion exchange membranes interposed therebetween are included between the positive electrode and the negative electrode.

### CITATION LIST

### Patent Literature

Patent Literature 1: Japanese Unexamined Patent Application Publication No. 2022-97062

### DISCLOSURE OF INVENTION

### PROBLEMS TO BE SOLVED BY THE INVENTION

In the electrodialysis device of Patent Literature 1, a plurality of liquid chambers are laminated using the bipolar membranes. A bipolar membrane is an ion exchange membrane having a structure in which a cation exchange layer and an anion exchange layer are bonded together. By applying a voltage equal to or more than the theoretical splitting voltage of water to both sides of the ion exchange membrane, water in the ion exchange membrane is split into protons and hydroxide ions. When a plurality of liquid chambers are laminated using bipolar membranes in an electrochemical cell, a large amount of electric energy is required to dissociate water in the bipolar membranes.

An object of the present disclosure is to provide an electrochemical cell capable of decreasing an operating voltage.

### MEANS FOR SOLVING THE PROBLEMS

An electrochemical cell according to one aspect of the present disclosure includes: a first anode or an anode chamber configured to generate protons; a first cathode or a cathode chamber configured to generate hydroxide ions; and a plurality of electrolyte units disposed between the first anode or the anode chamber and the first cathode or the cathode chamber, in which each of the plurality of electrolyte units includes an electrolyte membrane, and a first liquid chamber arranged on a side of the first anode or the anode chamber and a second liquid chamber arranged on a side of the first cathode or the cathode chamber with the electrolyte membrane interposed therebetween, the plurality of electrolyte units are arranged with a porous conductive layer interposed therebetween, and the porous conductive layer is provided with a catalyst layer on both surfaces.

### EFFECT OF THE INVENTION

According to the present disclosure, it is possible to provide an electrochemical cell capable of decreasing an operating voltage.

### BRIEF DESCRIPTION OF DRAWINGS

FIG. 1 is a schematic diagram of a carbon compound production system.
FIG. 2 is a cross-sectional diagram illustrating a configuration example of a concentration separation unit.
FIG. 3 is an explanatory diagram for explaining the operation of a concentration separation device.
FIG. 4 is a diagram illustrating a configuration example of an electrodialysis device to which an electrochemical cell is applied.

### DESCRIPTION OF EMBODIMENTS

(1) An electrochemical cell according to one aspect of the present disclosure includes: a first anode or an anode chamber configured to generate protons; a first cathode configured to reduce protons or a cathode chamber configured to generate hydroxide ions; and a plurality of electrolyte units disposed between the first anode or the anode chamber and the first cathode or the cathode chamber, in which each of the plurality of electrolyte units includes an electrolyte membrane, and a first liquid chamber arranged on a side of the first anode or the anode chamber and a second liquid chamber arranged on a side of the first cathode or the cathode chamber with the electrolyte membrane interposed therebetween, the plurality of electrolyte units are arranged with a porous conductive layer interposed therebetween, and the porous conductive layer is provided with a catalyst layer on both surfaces.

An electrochemical cell according to another aspect of the present disclosure includes: a first anode or an anode chamber configured to generate protons; a first cathode or a cathode chamber, the cathode chamber being configured to generate hydroxide ions; and a plurality of electrolyte units disposed between the first anode or the anode chamber and the first cathode or the cathode chamber, in which each of the plurality of electrolyte units includes an electrolyte membrane, and a first liquid chamber arranged on a side of the first anode or the anode chamber and a second liquid chamber arranged on a side of the first cathode or the cathode chamber with the electrolyte membrane interposed therebetween, the plurality of electrolyte units are arranged with a porous conductive layer interposed therebetween, and the porous conductive layer is provided with a catalyst layer on both surfaces. Examples of the first cathode include a first cathode configured to reduce protons and a first cathode configured to reduce water.

In the present description, "laminated without using a bipolar membrane" means that at least two liquid chambers are laminated without using a bipolar membrane, and does not exclude an electrochemical cell including a bipolar membrane.

According to the electrochemical cell described in the above (1), by stacking the electrolyte units using the porous conductive layer provided with the catalyst layer on both surfaces, the voltage required for permeation of hydrogen ions between the electrolyte units can be decreased. By this decrease, the voltage to be applied to the electrochemical cell can be made lower, and the energy consumption can be decreased.

According to the above-described configuration, since the plurality of electrolyte units can be laminated without using a bipolar membrane, the voltage required for permeation of hydrogen ions between the electrolyte units can be decreased as compared with the case where a bipolar membrane is used. This is because, when a bipolar membrane is used, it is necessary to apply a voltage at least enough to dissociate water molecules into protons (H⁺) and hydroxyl groups (OH⁻), but, when the porous conductive layer provided with the catalyst layer on both surfaces is used, such application of a voltage becomes unnecessary. Specifically, this is because the voltage required in the porous conductive layer provided with the catalyst layer on both surfaces is the sum of the voltage required for the reaction in which protons are converted into hydrogen molecules and the voltage required for the reaction in which hydrogen molecules are converted into protons, and the sum of the voltages is much smaller than the voltage for dissociating water. The theoretical voltage for dissociating water molecules into protons (H⁺) and hydroxyl groups (OH⁻) in a bipolar membrane is about 0.83 V, and the theoretical voltages for the reaction in which protons are converted into hydrogen molecules and the reaction in which hydrogen molecules are converted into protons in the porous conductive layer provided with the catalyst layer on both surfaces are 0 V. That is, by laminating a plurality of liquid chambers using the porous conductive layer provided with the catalyst layer on both surfaces, the voltage to be applied to the electrochemical cell can be further made lower as compared with the case where the same laminating is performed using a bipolar membrane, and the energy consumption can be decreased.

(2) In the electrochemical cell described in the above (1), the first anode may be configured to generate protons from hydrogen, and the first cathode may be configured to generate hydrogen from protons.

According to the electrochemical cell described in the above (2), the electrochemical cell can function as an electrochemical hydrogen pump. For example, the voltage to be applied to the electrochemical cell can be made lower than that in a method using water electrolysis or dissociation of water by a bipolar membrane, and the energy consumption can be further decreased.

(3) In the electrochemical cell described in the above (1) or (2), the first liquid chamber may be configured to be supplied with a first electrolyte solution in which carbon dioxide is absorbed, and the second liquid chamber may be configured to be supplied with a second electrolyte solution.

According to the electrochemical cell described in the above (3), since carbon dioxide can be generated, the electrochemical cell can be used as a carbon dioxide production device.

(4) In the electrochemical cell described in any one of the above (1) to (3), the anode chamber may include a second anode, an electrolyte solution, and a first bipolar membrane, and the cathode chamber may include a second cathode, an electrolyte solution, and a second bipolar membrane.

According to the electrochemical cell described in the above (4), since a predetermined acid or alkali can be generated in the first liquid chamber and the second liquid chamber by protons and hydroxide ions generated by dissociation of water in the bipolar membranes of the anode chamber and the cathode chamber, the electrochemical cell can be used as an electrodialysis device.

(5) In the electrochemical cell described in the above (4), one of the first liquid chamber and the second liquid chamber may be configured to be supplied to an electrolyte solution containing an inorganic salt, an organic acid salt, or an amino acid salt.

According to the electrochemical cell described in the above (5), an acid or an alkali from the inorganic salt, an organic acid or an alkali from the organic acid salt, or an amino acid or an alkali from the amino acid salt can be generated using the electrochemical cell.

(6) In the electrochemical cell described in any one of the above (1) to (5), at least one of the porous conductive layer or the catalyst layer provided on the both surfaces of the porous conductive layer may be subjected to water repellent treatment.

According to the electrochemical cell described in the above (6), since the water repellency is imparted to at least one layer of the porous conductive layer or the catalyst layer provided on the both surfaces thereof, leakage of the liquid from the first liquid chamber and the second liquid chamber to the layer can be suppressed. In addition, in the electrochemical cell of the present disclosure, water enters the inside of the porous conductive layer together with the transfer of protons. However, according to the above-described configuration, since the water repellency is imparted to the layer, water easily aggregates in the inside of the layer, and as a result, a space in which a hydrogen gas can diffuse is maintained for a long period of time.

(7) In the electrochemical cell described in any one of the above (1) to (6), the catalyst layer may contain catalytic particles supported on the surfaces of the porous conductive layer.

According to the electrochemical cell described in the above (7), the surface area of the catalyst layer can be increased, and the reactivity by the catalyst can be enhanced.

(8) In the electrochemical cell described in the above (7), the porous conductive layer may include a discharge port for a liquid.

According to the electrochemical cell described in the above (8), water present in the layer can be discharged. The protons passing through the inside of the layer transfer together with water when flowing through the inside of the layer. By discharging the water present in the layer through the discharge port, the diffusivity of hydrogen can be improved.

(9) The electrochemical cell described in the above (8) may include a flow path may be configured to allow a liquid discharged from the discharge port to flow therethrough and a valve for opening and closing the flow path.

According to the electrochemical cell described in the above (9), since the opening and closing of the flow path of the liquid can be switched, the liquid can be appropriately discharged and unnecessary leakage of other components in the layer can be suppressed.

The present disclosure will be specifically described with reference to the drawings illustrating embodiments thereof.

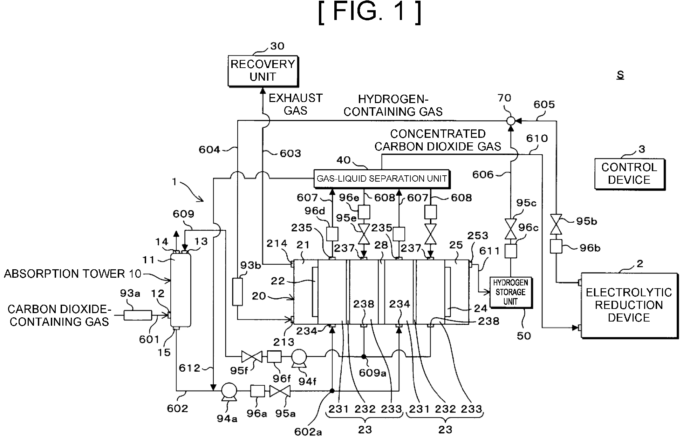

FIG. 1 is a schematic diagram of a carbon compound production system S. In the present embodiment, as an example, an electrochemical cell is applied to the carbon compound production system S. The carbon compound production system S of the present embodiment is a system in which a carbon dioxide-containing gas containing low-concentration carbon dioxide is used as a raw material gas, carbon dioxide is concentrated and recovered from the raw material gas, and a carbon compound to be a valuable resource is produced from the recovered carbon dioxide. The carbon compound production system S of the present embodiment includes a concentration separation device 1, an electrolytic reduction device 2, and a control device 3. The concentration separation device 1 includes an absorption tower 10, a concentration separation unit 20, a recovery unit 30, a gas-liquid separation unit 40, and a hydrogen storage unit 50. The concentration separation device 1 is an example of a carbon dioxide production device.

The absorption tower 10 brings a carbon dioxide-containing gas into gas-liquid contact with a first electrolyte solution to cause carbon dioxide to be absorbed into the first electrolyte solution. In the present description, "absorption" means that a chemical reaction occurs to form predetermined ions and the ions are dissolved. The absorption tower 10 is an example of a gas-liquid contact unit.

The carbon dioxide-containing gas is a gas containing low-concentration carbon dioxide, and is, for example, the atmosphere, exhaust gas, or the like. The carbon dioxide concentration in the carbon dioxide-containing gas is, for example, from 0.01 vol% to 30 vol%, inclusive. The carbon dioxide-containing gas may contain, in addition to carbon dioxide, gases such as nitrogen, water vapor, carbon monoxide, hydrogen sulfide, carbonyl sulfide, sulfur dioxide, nitrogen dioxide, methane, and hydrogen.

The concentration separation unit 20 generates a concentrated carbon dioxide gas by desorbing and releasing carbon dioxide from the liquid that has absorbed carbon dioxide. The concentrated carbon dioxide gas contains carbon dioxide at a higher concentration than the carbon dioxide-containing gas. The carbon dioxide concentration in the concentrated carbon dioxide gas is usually from 90 vol% to 100 vol%, inclusive. The concentrated carbon dioxide gas generated in the concentration separation unit 20 is supplied to the electrolytic reduction device 2.

The concentration separation unit 20 constitutes an electrochemical cell including a first anode 22 and a first cathode 24. The concentration separation unit 20 desorbs carbon dioxide from the liquid that has absorbed carbon dioxide by using an electrodialysis method by hydrogen pumping. A hydrogen-containing gas containing hydrogen is supplied to the concentration separation unit 20. A hydrogen pressurizing operation by an electrochemical hydrogen pump generates a hydrogen gas having a higher pressure than the hydrogen-containing gas.

The hydrogen concentration of the hydrogen-containing gas is less than 99 vol% in the hydrogen-containing gas. The hydrogen concentration in the hydrogen-containing gas is preferably 50 vol% or less, more preferably 30 vol% or less, and still more preferably 10 vol% or less. The lower limit of the hydrogen concentration in the hydrogen-containing gas is not particularly limited, and may be, for example, 0.01 vol% or more. The hydrogen-containing gas may be a gas containing hydrogen as an impurity. The hydrogen concentration in the gas of 100 vol% means a gas consisting of only hydrogen, that is, pure hydrogen.

The hydrogen-containing gas may be a gas adjusted to have a total hydrogen concentration of less than 99 vol% by mixing a gas comprising a hydrogen concentration of less than 99 vol% and a gas comprising a hydrogen concentration of 99 vol% or more.

In the concentration separation unit 20, hydrogen contained in the hydrogen-containing gas is supplied to the first anode 22 of the electrochemical hydrogen pump, and protons are generated by an oxidation reaction. Components other than hydrogen contained in the hydrogen-containing gas remain unreacted. By supplying a mixed gas containing hydrogen and components other than hydrogen to the concentration separation unit 20, hydrogen can be separated (removed) from the mixed gas, and a gas containing the components other than hydrogen can be discharged. The gas containing the components other than hydrogen is recovered by the recovery unit 30.

The concentration separation device 1 of the present embodiment functions as a carbon dioxide production device that produces high-concentration carbon dioxide and also functions as a hydrogen separation device that separates hydrogen from a hydrogen-containing gas.

The electrolytic reduction device 2 generates a gas containing a carbon compound by electrolytically reducing carbon dioxide in the concentrated carbon dioxide gas obtained in the concentration separation unit 20. The electrolytic reduction device 2 is an example of a reduction device. The electrolytic reduction device 2 generates a mixed gas containing a carbon compound such as hydrocarbon (for example, methane, ethylene, or the like) or carbon monoxide, and hydrogen. The hydrogen concentration of the mixed gas is, for example, less than 99 vol%, preferably 50 vol% or less, more preferably 30 vol% or less, and still more preferably 10 vol% or less in the mixed gas.

The mixed gas of a carbon compound and hydrogen generated in the electrolytic reduction device 2 is supplied to the concentration separation unit 20. The concentration separation unit 20 separates hydrogen from the mixed gas and discharges a gas containing the carbon compound. The gas containing the carbon compound can be used as a valuable resource.

The carbon compound production system S can realize carbon recycling in which carbon dioxide contained in the atmosphere or exhaust gas is used as a carbon resource and is converted into various carbon compounds for reuse. Hereinafter, the carbon compound production system S will be described in detail.

The absorption tower 10 includes a main body 11 extending vertically, a gas inlet 12 provided in a lower part of a side wall of the main body 11, a liquid inlet 13 and a gas outlet 14 provided in an upper part of the main body 11, and a liquid outlet 15 provided in a bottom part of the main body 11. The gas inlet 12 is connected to a carbon dioxide-containing gas supply source (not illustrated) via a first passage 601.

The carbon dioxide-containing gas is supplied into the tower from the gas inlet 12 via the first passage 601, flows through the tower, and is then discharged from the gas outlet 14.

The first electrolyte solution for absorbing carbon dioxide is supplied from the liquid inlet 13 and comes into contact with the carbon dioxide-containing gas in the tower to absorb carbon dioxide. The first electrolyte solution that has absorbed carbon dioxide is supplied from the liquid outlet 15 to the concentration separation unit 20 via a second passage 602.

A method for bringing the carbon dioxide-containing gas into contact with the first electrolyte solution is not particularly limited. Examples of the method include a method of bubbling the carbon dioxide-containing gas into the first electrolyte solution, a method of dropping the first electrolyte solution in a mist form into the carbon dioxide-containing gas by an atomization method or a spray method, and a method of bringing the high-pressure carbon dioxide-containing gas into countercurrent contact with an absorbing liquid in the absorption tower 10 filled with a porcelain or metal mesh filler. Thus, the first electrolyte solution that has absorbed carbon dioxide is obtained.

The first electrolyte solution of the present embodiment is a mixed solution containing an absorbing liquid that contributes to absorption of carbon dioxide and an electrolyte solution that contributes to an oxidation-reduction reaction of hydrogen described below. The absorbing liquid and the electrolyte solution are aqueous solutions containing the same cations (for example, K⁺). In the present description, the "mixed solution" means a liquid containing a component corresponding to the absorbing liquid and a component corresponding to the electrolyte solution, and it is not necessary to actually mix an absorbing liquid and an electrolyte solution different from each other.

The absorbing liquid contained in the first electrolyte solution is an alkaline aqueous solution. Examples of the alkaline aqueous solution include aqueous solutions of alkaline metal compounds, alkaline-earth metal compounds, and amine compounds, and aqueous solutions of alkaline metal compounds are preferable.

Examples of the alkaline metal compounds and the alkaline-earth metal compounds include compounds of alkaline metals such as sodium, lithium, and potassium, and compounds of alkaline-earth metals such as calcium, magnesium, and barium. As the alkaline metal compounds and the alkaline-earth metal compounds, hydroxides, oxides, and nitrates of alkaline metals or alkaline-earth metals are preferable, and hydroxides are more preferable. Specific examples of the alkaline aqueous solution include aqueous solutions of potassium hydroxide, sodium hydroxide, and calcium hydroxide, and a potassium hydroxide aqueous solution is preferable.

Examples of the amine compounds include basic amines such as monoethanolamine, diethanolamine, diisopropanolamine, methyldiethanolamine, and triethanolamine. The alkaline aqueous solution may be used alone or in combination of two or more kinds thereof.

Examples of the electrolyte solution contained in the first electrolyte solution include a potassium chloride aqueous solution and a sodium chloride aqueous solution, and a potassium chloride aqueous solution is preferable. The electrolyte solution may be used alone or in combination of two or more kinds thereof.

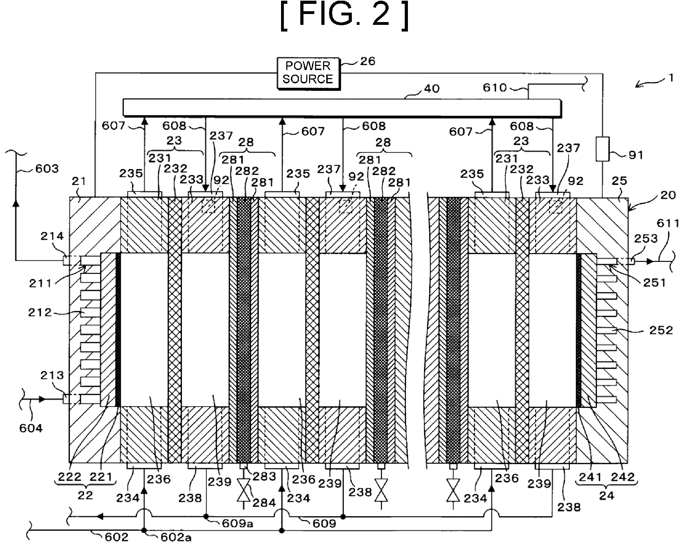

FIG. 2 is a cross-sectional diagram illustrating a configuration example of the concentration separation unit 20. As illustrated in FIGS. 1 and 2, the concentration separation unit 20 has a substantially rectangular cross section and has a substantially rectangular parallelepiped shape as a whole. The concentration separation unit 20 further includes an anode plate 21 having an anode gas chamber (first gas chamber) 211, a first anode 22, a plurality of electrolyte units 23, a first cathode 24, a cathode plate 25 having a cathode gas chamber (second gas chamber) 251, and a power source 26. The anode plate 21, the first anode 22, the plurality of electrolyte units 23, the first cathode 24, and the cathode plate 25 are arranged in this order, and are integrated by being fastened by, for example, a fastening member (not illustrated). Gaskets (not illustrated) may be arranged between the anode plate 21 and the first anode 22 and between the first cathode 24 and the cathode plate 25. Although two electrolyte units 23 are illustrated in FIG. 1 for simplification of description, the concentration separation unit 20 may include a large number of electrolyte units 23, for example, 50 or 100 electrolyte units 23.

Each of the electrolyte units 23 includes an anode liquid chamber (first liquid chamber) 231, an electrolyte membrane 232, and a cathode liquid chamber (second liquid chamber) 233. In each of the electrolyte units 23, the anode liquid chamber 231 is arranged on the side of the first anode 22 and the cathode liquid chamber 233 is arranged on the side of the first cathode 24 with the electrolyte membrane 232 interposed therebetween. The plurality of electrolyte units 23 are laminated with an intermediate layer 28 interposed therebetween to form a laminated body.

In the anode plate 21, the anode gas chamber 211 through which a hydrogen-containing gas flows is formed in a portion facing the first anode 22. The anode gas chamber 211 regulates the flow of the hydrogen-containing gas to be supplied to the first anode 22.

The anode gas chamber 211 includes an anode gas flow path 212, a first supply port 213 connected to one end (inlet) of the anode gas flow path 212, and a first discharge port 214 connected to an other end (outlet) of the anode gas flow path 212. As an example, the anode gas flow path 212 is a groove-shaped flow path formed on the surface of the anode plate 21. The anode gas flow path 212 is a single flow path, and is arranged so as to turn back in a region facing the first anode 22 on the surface of the anode plate 21. Alternatively, the anode gas flow path 212 may include a plurality of flow paths or may include a branched path. The hydrogen-containing gas supplied from the first supply port 213 flows through the anode gas flow path 212 and is then discharged from the first discharge port 214. In the region facing the first anode 22 on the surface of the anode plate 21, a portion other than a portion where the anode gas flow path 212 is formed is in contact with the surface of the first anode 22, and thus, electrons can transfer between the anode plate 21 and the first anode 22.

The anode plate 21 can also be composed of a plurality of components having different functions. The anode plate 21 can also be formed by, for example, laminating an end plate, a current collector plate, and a plate member provided with the anode gas flow path 212 on one surface thereof in this order. The end plate cooperates with the above-described fastening member (not illustrated) and a cathode-side end plate to fasten and integrate the components constituting the concentration separation unit 20. The current collector plate transfers electrons to and from the first anode 22 via the plate member provided with the anode gas flow path 212, and is connected to the power source 26 via wiring. The plate member provided with the anode gas flow path 212 constitutes the anode gas chamber 211 by the flow path, and regulates the flow of the hydrogen-containing gas to be supplied to the first anode 22.

In the example illustrated in FIG. 2, the first supply port 213 is provided in a lower part of the anode plate 21, and the first discharge port 214 is provided in an upper part of the anode plate 21. When the anode plate 21 has a substantially rectangular parallelepiped shape extending vertically, the first supply port 213 and the first discharge port 214 may be provided in the vicinity of the apexes of the opposite corners, or may be provided in the vicinity of the centers of the short sides.

The first discharge port 214 is connected to the recovery unit 30 via a third passage 603. The first supply port 213 is connected to the electrolytic reduction device 2 via a fourth passage 604, a merge portion 70, and a fifth passage 605. The first supply port 213 is also connected to the hydrogen storage unit 50 via the fourth passage 604, the merge portion 70, and a sixth passage 606.

In the cathode plate 25, the cathode gas chamber 251 through which a hydrogen gas generated by the first cathode 24 flows is formed in a portion facing the first cathode 24. Hereinafter, the hydrogen gas generated by the first cathode 24 is also referred to as a high-pressure hydrogen gas.

The cathode gas chamber 251 includes a cathode gas flow path 252, and a second discharge port 253 connected to one end (outlet) of the cathode gas flow path 252. As an example, the cathode gas flow path 252 is a groove-shaped flow path formed on the surface of the cathode plate 25. The cathode gas flow path 252 is a single flow path, and is arranged so as to turn back in a region facing the first cathode 24 on the surface of the cathode plate 25. Alternatively, the cathode gas flow path 252 may include a plurality of flow paths or may include a branched path. The high-pressure hydrogen gas supplied to the cathode gas flow path 252 flows toward the second discharge port 253. In the region facing the first cathode 24 on the surface of the cathode plate 25, a portion other than a portion where the cathode gas flow path 252 is formed is in contact with the surface of the first cathode 24, and thus, electrons can transfer between the cathode plate 25 and the first cathode 24. Similarly to the anode plate 21, the cathode plate 25 can also be composed of a plurality of components having different functions.

In the example illustrated in FIG. 2, the second discharge port 253 is provided in an upper part of the cathode plate 25. The second discharge port 253 is connected to the hydrogen storage unit 50 via an eleventh passage 611. The hydrogen storage unit 50 stores the high-pressure hydrogen gas discharged from the cathode gas chamber 251.

In the concentration separation unit 20, the gas flow rate per unit time in the anode gas flow path 212 is preferably larger than the gas flow rate per unit time in the cathode gas flow path 252. For example, the gas flow rate per unit time in the anode gas flow path 212 may be set to be larger than the gas flow rate per unit time in the cathode gas flow path 252 by setting the flow path cross-sectional area of the anode gas flow path 212 larger than the flow path cross-sectional area of the cathode gas flow path 252. The flow rate of the hydrogen-containing gas to be supplied to the anode gas chamber 211 may be adjusted by a compression device 93b. According to the above-described configuration, even when a hydrogen-containing gas containing low-concentration hydrogen is used, a sufficient amount of gas can be supplied to the first anode 22, and thus, a shortage of the oxidation reaction of hydrogen can be suppressed.

The gas flow rate per unit time in the anode gas flow path 212 means a flow rate in the vicinity of the inlet of the anode gas flow path 212. The gas flow rate per unit time in the anode gas flow path 212 is the same as the flow rate per unit time of the hydrogen-containing gas to be supplied to the first supply port 213. The gas flow rate per unit time in the cathode gas flow path 252 means a flow rate in the vicinity of the outlet of the cathode gas flow path 252. The gas flow rate per unit time in the cathode gas flow path 252 is the same as the flow rate per unit time of the high-pressure hydrogen gas to be discharged from the second discharge port 253.

The flow path cross-sectional area of the anode gas flow path 212 and the flow path cross-sectional area of the cathode gas flow path 252 mean areas of cross sections appearing when each flow path is cut along a plane perpendicular to a direction in which a fluid flows. When the above-described cross-sectional area is substantially uniform from an inlet to an outlet of the flow path, the cross-sectional area at a freely-selected distance from the inlet is defined as the flow path cross-sectional area. When the cross-sectional area changes as the distance from the inlet of the flow path increases, an average value of the cross-sectional area in the vicinity of the inlet and the cross-sectional area in the vicinity of the outlet may be defined as the flow path cross-sectional area, or an average value of the cross-sectional area in the vicinity of the inlet, the cross-sectional area in the vicinity of the outlet, and the cross-sectional area at one or a plurality of positions in the flow path may be defined as the flow path cross-sectional area. The one or a plurality of positions in the flow path may be at 1/2 of the distance from the inlet to the outlet. The inlet and the outlet are an inlet and an outlet of the anode gas flow path 212 in the case of the flow path cross-sectional area of the anode gas flow path 212, and an inlet and an outlet of the cathode gas flow path 252 in the case of the flow path cross-sectional area of the cathode gas flow path 252.

The anode plate 21 is electrically connected to the first anode 22. The cathode plate 25 is electrically connected to the first cathode 24. The anode plate 21 and the cathode plate 25 are connected to the power source 26 via wiring. The concentration separation unit 20 includes a current sensor 91 that detects a current flowing between the first anode 22 and the first cathode 24.

The power source 26 applies a voltage to the first anode 22 and the first cathode 24 via the anode plate 21 and the cathode plate 25. A terminal on the high potential side of the power source 26 is connected to the anode plate 21, and a terminal on the low potential side is connected to the cathode plate 25.

The hydrogen-containing gas is supplied to the first anode 22, and the first anode 22 generates protons from hydrogen in the hydrogen-containing gas. The first anode 22 is a gas diffusion electrode, and includes an anode catalyst layer 221 containing an anode catalyst and an anode gas diffusion layer 222. The anode catalyst layer 221 is provided on one surface of the anode gas diffusion layer 222. The anode liquid chamber 231 is in contact with a surface of the first anode 22 on the side of the anode catalyst layer 221, and the anode plate 21 (anode gas chamber 211) is in contact with a surface of the first anode 22 on the side of the anode gas diffusion layer 222. The anode catalyst layer 221 may be formed by causing the anode gas diffusion layer 222 to support fine particles of the anode catalyst in a highly dispersed manner. Such an anode catalyst layer 221 can be produced, for example, by applying a mixture containing fine particles of the anode catalyst, a cation exchange resin, and a solvent onto a predetermined base material, then drying the solvent, and transferring the dried mixture from the base material to the surface of the anode gas diffusion layer 222. Alternatively, by using the anode gas diffusion layer 222 as the predetermined base material, the anode catalyst layer 221 can be directly formed on the surface of the anode gas diffusion layer 222 and in a range of a predetermined thickness from the surface.

Examples of the anode catalyst include platinum, ruthenium, rhodium, palladium, and iridium. The anode catalyst may be used alone or in combination of two or more kinds thereof. When two or more kinds are combined, for example, a combination containing at least platinum and ruthenium can be used. An anode catalyst using such a combination has improved durability against catalyst poisoning by carbon monoxide as compared with, for example, an anode catalyst using platinum alone. The thickness of the anode catalyst layer 221 is, for example, 5 µm to 50 µm. When the thickness of the anode catalyst layer 221 is within the above range, protons can be effectively generated.

The anode gas diffusion layer 222 is made of a porous material and has conductivity and gas diffusivity. The anode gas diffusion layer 222 uniformly diffuses the hydrogen-containing gas supplied from the fourth passage 604 via the anode gas flow path 212 into the anode catalyst layer 221. Examples of the anode gas diffusion layer 222 include a porous carbon fiber sheet such as carbon paper, carbon cloth, or carbon felt, and a sintered body made of carbon particles, and carbon paper is preferable. Examples of the anode gas diffusion layer 222 may include a sintered body of metal fiber made of a titanium alloy, stainless steel, or the like, a sintered body of powder metal, a metal mesh, and a foamed metal body. The thickness of the anode gas diffusion layer 222 is, for example, 100 µm to 1000 µm. When the thickness of the anode gas diffusion layer 222 is within the above range, the diffusivity of the gas in a direction from the side of the first anode 22 toward the side of the first cathode 24 can be improved.

The first cathode 24 generates hydrogen from protons supplied from the side of the first anode 22. The first cathode 24 is a gas diffusion electrode, and includes a cathode catalyst layer 241 containing a cathode catalyst and a cathode gas diffusion layer 242. The cathode catalyst layer 241 is provided on one surface of the cathode gas diffusion layer 242. The cathode liquid chamber 233 is in contact with a surface of the first cathode 24 on the side of the cathode catalyst layer 241, and the cathode plate 25 (cathode gas chamber 251) is in contact with a surface of the first cathode 24 on the side of the cathode gas diffusion layer 242. The cathode catalyst layer 241 may be formed by causing the cathode gas diffusion layer 242 to support fine particles of the cathode catalyst in a highly dispersed manner. A production method of such a cathode catalyst layer 241 may be the same as that of the above-described anode catalyst layer 221, and the cathode catalyst layer 241 can be produced, for example, by a method including a step of applying a mixture containing fine particles of the cathode catalyst, a cation exchange resin, and a solvent onto a predetermined base material and then drying the solvent.

The cathode catalyst may be the same as the above-described anode catalyst, and is preferably platinum. The cathode catalyst may be used alone or in combination of two or more kinds thereof. The thickness of the cathode catalyst layer 241 is, for example, 5 µm to 50 µm. When the thickness of the cathode catalyst layer 241 is within the above range, hydrogen can be effectively generated.

The cathode gas diffusion layer 242 is made of a porous material and has conductivity and gas diffusivity. Examples of the material of the cathode gas diffusion layer 242 include the same materials as those of the above-described anode gas diffusion layer 222. The thickness of the cathode gas diffusion layer 242 is, for example, 100 µm to 1000 µm. When the thickness of the cathode gas diffusion layer 242 is within the above range, the diffusivity of hydrogen in a direction from the side of the first anode 22 toward the side of the first cathode 24 can be improved.

Each of the first anode 22 and the first cathode 24 is preferably subjected to water repellent treatment. The water repellent treatment is performed, for example, by adding or laminating a water repellent material such as polytetrafluoroethylene to the anode gas diffusion layer 222 and the cathode gas diffusion layer 242. The water repellency can also be imparted to the first anode 22 and the first cathode 24 by performing the same water repellent treatment on the anode catalyst layer 221 and the cathode catalyst layer 241. By imparting the water repellency, leakage of the liquid from the anode liquid chamber 231 to the first anode 22 and leakage of the liquid from the cathode liquid chamber 233 to the first cathode 24 can be suppressed. As a means for suppressing the leakage of these liquids, in addition to the method of performing the water repellent treatment on the first anode 22 and the first cathode 24, a polymer membrane having an ion exchange group may be provided between the first anode 22 and the anode liquid chamber 231 and between the first cathode 24 and the cathode liquid chamber 233. Examples of the material of the polymer membrane having an ion exchange group include Nafion (registered trademark). By providing such a membrane, it is possible to suppress the liquid in the liquid chamber from transferring to the electrode side while maintaining the transfer of the charge.

The electrolyte unit 23 includes the electrolyte membrane 232, and the anode liquid chamber 231 arranged on the side of the first anode 22 and the cathode liquid chamber 233 arranged on the side of the first cathode 24 with the electrolyte membrane 232 interposed therebetween. All the electrolyte units 23 have the same configuration. The electrolyte membrane 232 is a cation exchange membrane (CEM), and is made of an electrolyte material having cation conductivity. Examples of the electrolyte membrane 232 include a fluorine-based cation exchange membrane such as a perfluorosulfonic acid-based cation exchange membrane. The thickness of the electrolyte membrane 232 is, for example, 2 µm to 500 µm.

The anode liquid chamber 231 is made of, for example, a resin, and has a flat plate shape extending vertically. The anode liquid chamber 231 includes a third supply port 234 provided in a lower part, a third discharge port 235 provided in an upper part, and an anode liquid flow path 236 formed between the third supply port 234 and the third discharge port 235. One end (inlet) of the anode liquid flow path 236 is connected to the third supply port 234, and an other end (outlet) of the anode liquid flow path 236 is connected to the third discharge port 235. In the anode liquid flow path 236, the liquid flows from the inlet toward the outlet.

The shape of the anode liquid chamber 231 and the positions of the third supply port 234 and the third discharge port 235 in the anode liquid chamber 231 are not limited to the above-described example. For example, the third supply port 234 may be provided in an upper part or a lateral part of the anode liquid chamber 231, and the third discharge port 235 may be provided in a lower part or a lateral part of the anode liquid chamber 231.

In the anode liquid flow path 236, a concentrated carbon dioxide gas is released from the first electrolyte solution. A gas-liquid mixture of the released concentrated carbon dioxide gas and a second electrolyte solution, which is an electrolyte solution after the release of carbon dioxide, flows through the anode liquid flow path 236 and is then discharged from the third discharge port 235.

The anode liquid flow path 236 is a space formed between the anode catalyst layer 221 and the electrolyte membrane 232, and is partitioned from the outside by a frame body made of a resin or the like constituting the anode liquid chamber 231. The anode liquid flow path 236 is arranged such that, when the space is filled with an electrolyte solution, the whole of one surface of the anode catalyst layer 221 is in contact with the electrolyte solution. The anode liquid flow path 236 may include a flow path forming member formed in a net shape as a spacer, and may be configured by a space generated by three dimensionally intersecting the flow path forming member. The spacer prevents the anode liquid flow path 236 from being blocked due to deformation of the anode catalyst layer 221 and the electrolyte membrane 232.

The third supply port 234 of each of the anode liquid chambers 231 is connected to the absorption tower 10 via the second passage 602. The second passage 602 branches at a branch point 602a and is connected to each of the anode liquid chambers 231. The third discharge port 235 of each of the anode liquid chambers 231 is connected to the gas-liquid separation unit 40 via a seventh passage 607. A plurality of seventh passages 607 are provided corresponding to the respective anode liquid chambers 231. The respective seventh passages 607 may be merged on the downstream side.

The cathode liquid chamber 233 is made of, for example, a resin, and has a flat plate shape extending vertically. The cathode liquid chamber 233 includes a fourth supply port 237 provided in an upper part, a fourth discharge port 238 provided in a lower part, and a cathode liquid flow path 239 formed between the fourth supply port 237 and the fourth discharge port 238. One end (inlet) of the cathode liquid flow path 239 is connected to the fourth supply port 237, and an other end (outlet) of the cathode liquid flow path 239 is connected to the fourth discharge port 238. In the cathode liquid flow path 239, the liquid flows from the inlet toward the outlet.

The cathode liquid flow path 239 is a space formed between the electrolyte membrane 232 and the cathode catalyst layer 241, and is partitioned from the outside by a frame body made of a resin or the like constituting the cathode liquid chamber 233. The cathode liquid flow path 239 is arranged such that, when the space is filled with an electrolyte solution, the whole of one surface of the cathode catalyst layer 241 is in contact with the electrolyte solution. The cathode liquid flow path 239 may include a spacer similarly to the anode liquid flow path 236.

In the cathode liquid chamber 233, the second electrolyte solution is supplied through the fourth supply port 237, and the first electrolyte solution in which an absorbing liquid component is regenerated is discharged from the fourth discharge port 238.

The fourth supply port 237 of each of the cathode liquid chambers 233 is connected to the gas-liquid separation unit 40 via an eighth passage 608. A plurality of eighth passages 608 are provided corresponding to the respective cathode liquid chambers 233. The respective eighth passages 608 may be merged on the upstream side. The fourth discharge port 238 of each of the cathode liquid chambers 233 is connected to the absorption tower 10 via a ninth passage 609. The ninth passage 609 branches corresponding to each of the cathode liquid chambers 233, and is merged at a merge point 609a.

Each of the cathode liquid chambers 233 is provided with a liquid sensor 92. The liquid sensor 92 is, for example, a pH meter, and measures the pH of the liquid in the cathode liquid chamber 233. The liquid sensor 92 may be provided in the eighth passage 608 or the ninth passage 609.

In the concentration separation unit 20, one electrolyte unit 23 and an other electrolyte unit 23 adjacent to each other are laminated in the same direction with the intermediate layer 28 interposed therebetween. One surface of the intermediate layer 28 is in contact with the cathode liquid chamber 233 of the one electrolyte unit 23 and an other surface of the intermediate layer 28 is in contact with the anode liquid chamber 231 of the other electrolyte unit 23. The intermediate layer 28 supplies protons supplied from the cathode liquid chamber 233 of the one electrolyte unit 23 to the anode liquid chamber 231 of the adjacent other electrolyte unit 23.

The intermediate layer 28 includes a catalyst layer 281 containing a catalyst and a gas diffusion layer 282. The catalyst layer 281 is formed on both surfaces of the gas diffusion layer 282. The catalyst layer 281 may be formed by supporting fine particles of the catalyst on the surface of the gas diffusion layer 282 in a highly dispersed manner.

The catalyst may be the same as the above-described anode catalyst, and is preferably platinum. The catalyst may be used alone or in combination of two or more kinds thereof. The catalyst is preferably used in a state of fine particles, and fine particles of a metal that functions as a catalyst, such as platinum described above, may be used, or fine particles of the metal supported on the surface of a carrier having electron conductivity, such as carbon black, may be used. Such a catalyst layer 281 can be produced, for example, by applying a mixture containing fine particles of the catalyst, a cation exchange resin, and a solvent onto a predetermined base material, then drying the solvent, and transferring the dried mixture from the base material to the surface of the gas diffusion layer 282. Alternatively, by using the gas diffusion layer 282 as the predetermined base material, the catalyst layer 281 can be directly formed on the surface of the gas diffusion layer 282 and in a range of a predetermined thickness from the surface.

The thickness of the catalyst layer 281 is, for example, 5 µm to 50 µm. When the thickness of the catalyst layer 281 is 5 µm or more, the reactivity by the catalyst can be enhanced. When the thickness is 50 µm or less, the movement distance of protons can be shortened, and the operating voltage of the electrochemical cell can be further lowered.

The gas diffusion layer 282 is made of a porous material and has conductivity and gas diffusivity. The gas diffusion layer 282 uniformly diffuses hydrogen molecules supplied from the catalyst layer 281 in contact with the cathode liquid chamber 233 into the catalyst layer 281 in contact with the anode liquid chamber 231. Examples of the material constituting the gas diffusion layer 282 include the same materials as those of the above-described anode gas diffusion layer 222, and carbon paper is preferable. The thickness of the gas diffusion layer 282 is, for example, 100 µm to 1000 µm. When the thickness of the gas diffusion layer 282 is within the above range, the diffusivity of hydrogen in a direction from the side of the first anode 22 toward the side of the first cathode 24 can be improved.

The intermediate layer 28 is preferably subjected to water repellent treatment. The water repellent treatment is performed, for example, by adding or laminating a water repellent material such as polytetrafluoroethylene to at least one layer of the pair of catalyst layers 281 or the gas diffusion layer 282. By imparting the water repellency, leakage of the liquid from the anode liquid chamber 231 and the cathode liquid chamber 233 to the intermediate layer 28 can be suppressed.

As a means for suppressing the leakage of the liquid, in addition to the method of imparting the water repellency to the intermediate layer 28, a polymer membrane having an ion exchange group may be provided at least one of between the cathode liquid chamber 233 and the catalyst layer 281 in contact with the cathode liquid chamber 233 or between the anode liquid chamber 231 and the catalyst layer 281 in contact with the anode liquid chamber 231. Examples of the material of the polymer membrane having an ion exchange group include Nafion (registered trademark). By providing such a membrane, it is possible to suppress the liquid in the liquid chamber from transferring to the inside of the intermediate layer while maintaining the transfer of the charge. In particular, when a polymer membrane having an ion exchange group is provided between the cathode liquid chamber 233 and the catalyst layer 281 in contact with the cathode liquid chamber 233, the catalyst layer 281 and the polymer membrane having an ion exchange group are preferably bonded to each other, or are preferably brought into contact with each other and then pressed so as to come into close contact with each other. With such a configuration, it is possible to suppress the hydrogen gas generated in the catalyst layer 281 from transferring to the side of the cathode liquid chamber 233, and increase the ratio of the hydrogen gas transferring to the side of the gas diffusion layer 282.

Examples of the method of bonding the catalyst layer 281 to the polymer membrane having an ion exchange group include a method in which a mixture containing a polymer having an ion exchange group and a solvent is applied to the surface of the catalyst layer 281 so as to have a predetermined thickness and then dried to form the polymer membrane in a bonded state, and a pressure bonding method by so-called hot pressing, in which a polymer membrane having an ion exchange group is pressed against the surface of the catalyst layer 281 and is subjected to heat treatment at a predetermined temperature. The temperature of the heat treatment in the latter method is preferably equal to or more than the glass-transition temperature of the polymer membrane having an ion exchange group.

The intermediate layer 28 preferably further includes a sixth discharge port 283 for discharging the liquid and a valve 284 for opening and closing the sixth discharge port 283. The sixth discharge port 283 may be provided in a lower part of the gas diffusion layer 282. The valve 284 may be provided in an outlet of the sixth discharge port, or may be provided in the middle of a flow path through which the liquid discharged from the sixth discharge port flows. The sixth discharge port 283 discharges water generated inside the gas diffusion layer 282 of the intermediate layer 28 due to the passage of protons to the outside. The protons transfer together with water (so-called hydration water) when passing through the catalyst layer 281 of the intermediate layer 28, and accumulate as liquid water inside the gas diffusion layer 282. By discharging the accumulated water through the sixth discharge port 283, the diffusivity of hydrogen inside the gas diffusion layer 282 can be improved. By switching the opening and closing of the valve 284, it is possible to appropriately discharge water and suppress leakage of hydrogen.

The plurality of electrolyte units 23 are not limited to the configuration in which all the electrolyte units 23 are laminated with the intermediate layers 28 interposed therebetween, and at least two electrolyte units 23 may be laminated with the intermediate layer 28 interposed therebetween. The plurality of electrolyte units 23 may be laminated by using the intermediate layer 28 and a layer having another configuration in combination. As the layer having another configuration, any layer may be used as long as protons can be supplied from the cathode liquid chamber 233 to the anode liquid chamber 231, and for example, a bipolar membrane formed by bonding a cation exchange membrane and an anion exchange membrane may be used.

The gas-liquid separation unit 40 separates the concentrated carbon dioxide gas and the second electrolyte solution from each other. The gas-liquid separation unit 40 performs gas-liquid separation by, for example, a water displacement method, a gravity separation method, or the like. The gas-liquid separation unit 40 receives the gas-liquid mixture discharged from each of the anode liquid chambers 231 via the seventh passage 607. The gas-liquid separation unit 40 supplies the second electrolyte solution from which the concentrated carbon dioxide gas has been separated to each of the cathode liquid chambers 233 via the eighth passage 608.

The gas-liquid separation unit 40 is connected to the electrolytic reduction device 2 via a tenth passage 610. The gas-liquid separation unit 40 supplies the separated concentrated carbon dioxide gas to the electrolytic reduction device 2 via the tenth passage 610.

The electrolytic reduction device 2 generates a carbon compound by electrolyzing carbon dioxide together with water. The configuration of the electrolytic reduction device 2 is not particularly limited, and examples thereof include a configuration including an anode, a cathode, and an ion exchange membrane arranged between the anode and the cathode. The gas obtained in the electrolytic reduction device 2 is a mixed gas containing hydrogen as a by-product in addition to a carbon compound as a reduced product. The electrolytic reduction device 2 is connected to the merge portion 70 via the fifth passage 605.

The merge portion 70 merges the mixed gas sent from the electrolytic reduction device 2 as a first hydrogen source and the hydrogen gas sent from the hydrogen storage unit 50 as a second hydrogen source and supplies the merged gas to the concentration separation unit 20 as necessary. The merge portion 70 may be further connected to a third hydrogen source. The third hydrogen source is, for example, a hydrogen tank filled in advance with pure hydrogen comprising a hydrogen concentration of 100 vol%. Hydrogen from the third hydrogen source may be supplied to the hydrogen storage unit 50.

FIG. 1 illustrates an example in which the merge portion 70 is provided outside the concentration separation unit 20. Alternatively, the merge portion 70 may be provided in the concentration separation unit 20. When the merge portion 70 is provided in the concentration separation unit 20, the following configuration may be adopted. The concentration separation unit 20 includes a first supply port 213 connected to the fifth passage 605 and a second first supply port 213 connected to the sixth passage 606. Both the first supply port 213 and the second first supply port 213 are connected to the inlet of the anode gas flow path 212 via the merge portion 70 in the concentration separation unit 20.

The carbon compound production system S includes the first passage 601 to the eleventh passage 611 as described above. The first passage 601 allows the carbon dioxide-containing gas to flow from the carbon dioxide-containing gas supply source to the absorption tower 10. The first passage 601 includes a compression device 93a. The second passage 602 allows the first electrolyte solution to flow from the absorption tower 10 to the anode liquid chamber 231. The second passage 602 includes a pump 94a, a control valve 95a, and a flow meter 96a. The third passage 603 allows the exhaust gas from which hydrogen has been separated to flow from the anode gas chamber 211 to the recovery unit 30. The fourth passage 604 allows the hydrogen-containing gas containing the mixed gas and/or the high-pressure hydrogen gas to flow from the merge portion 70 to the anode gas chamber 211. The fourth passage 604 includes the compression device 93b. The fifth passage 605 allows the mixed gas to flow from the electrolytic reduction device 2 to the merge portion 70. The fifth passage 605 includes a control valve 95b and a flow meter 96b. The sixth passage 606 allows the high-pressure hydrogen gas to flow from the hydrogen storage unit 50 to the merge portion 70. The sixth passage 606 includes a control valve 95c and a flow meter 96c.

The seventh passage 607 allows the gas-liquid mixture to flow from the anode liquid chamber 231 to the gas-liquid separation unit 40. The seventh passage 607 includes a flow meter 96d. The eighth passage 608 allows the second electrolyte solution to flow from the gas-liquid separation unit 40 to the cathode liquid chamber 233. The eighth passage 608 includes a control valve 95e and a flow meter 96e. The ninth passage 609 allows the first electrolyte solution to flow from the cathode liquid chamber 233 to the absorption tower 10. The ninth passage 609 includes a pump 94f, a control valve 95f, and a flow meter 96f. The tenth passage 610 allows the concentrated carbon dioxide gas to flow from the gas-liquid separation unit 40 to the electrolytic reduction device 2. The eleventh passage 611 allows the high-pressure hydrogen gas to flow from the cathode gas chamber 251 to the hydrogen storage unit 50.

The compression devices 93a and 93b compress and send out a gas. The pumps 94a and 94f deliver a fluid. The control valves 95a, 95b, 95c, 95e, and 95f control a volume flow rate or a mass flow rate of a fluid flowing in a passage. The flow meters 96a, 96b, 96c, 96d, 96e, and 96f measure a volume flow rate or a mass flow rate of a fluid flowing in a passage. The fourth passage 604 and the fifth passage 605 may include a gas sensor for detecting a gas concentration. Hereinafter, the compression devices 93a and 93b are also collectively referred to as a compression device 93. The pumps 94a and 94f are also collectively referred to as a pump 94. The control valves 95a, 95b, 95c, 95e, and 95f are also collectively referred to as a control valve 95. The flow meters 96a, 96b, 96c, 96d, 96e, and 96f are also collectively referred to as a flow meter 96.

The absorption tower 10, the second passage 602, the concentration separation unit 20, the seventh passage 607, the gas-liquid separation unit 40, the eighth passage 608, and the ninth passage 609 constitute a circulation system of the electrolyte solution. The electrolyte solution containing the absorbing liquid and the electrolyte solution is circulated and utilized so as to absorb carbon dioxide in the absorption tower 10, release carbon dioxide in the concentration separation unit 20, and then absorb carbon dioxide again in the absorption tower 10.

The carbon compound production system S includes a first bypass passage 612 that allows the second electrolyte solution discharged from the anode liquid chamber 231 to bypass the cathode liquid chamber 233. The first bypass passage 612 allows the first electrolyte solution to flow from the gas-liquid separation unit 40 to the second passage 602 while bypassing the cathode liquid chamber 233. One end of the first bypass passage 612 is connected to the upstream side of the branch point 602a of the second passage 602. Alternatively, the first bypass passage 612 may connect the second passage 602 and the eighth passage 608. The carbon compound production system S may further include a second bypass passage (not illustrated) that allows the first electrolyte solution discharged from the cathode liquid chamber 233 to bypass the absorption tower 10 and the anode liquid chamber 231. One end of the second bypass passage is connected to the ninth passage 609, and an other end thereof is connected to the eighth passage 608.

The control device 3 is a computer, and includes a processor such as a central processing unit (CPU), a memory, an input/output interface, and the like (not illustrated). The memory stores various computer programs and data to be referenced by the processor. The input/output interface is connected to each of the current sensor 91, the liquid sensor 92, the compression device 93, the pump 94, the control valve 95, and the flow meter 96. The control device 3 acquires measured values from the current sensor 91, the liquid sensor 92, and the flow meter 96. The control device 3 outputs a control signal to the compression device 93, the pump 94, and the control valve 95 to control the driving thereof. Details of the content of the control executed by the control device 3 will be described below.

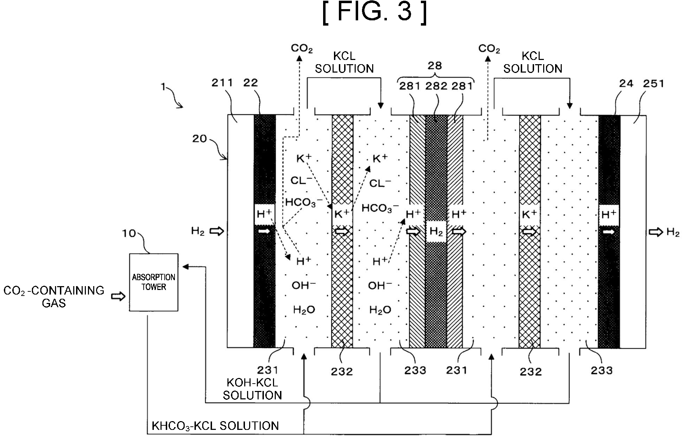

FIG. 3 is an explanatory diagram for explaining the operation of the concentration separation device 1. The operation of the concentration separation device 1 and the carbon compound production system S will be described with reference to FIG. 3. FIG. 3 illustrates an example in which two electrolyte units 23 are laminated for the purpose of simplifying the description.

A carbon dioxide-containing gas containing low-concentration carbon dioxide and a first electrolyte solution are supplied to the absorption tower 10. The carbon dioxide-containing gas is pressurized by the compression device 93a as necessary and supplied. The first electrolyte solution is supplied at a predetermined flow rate by the driving of the pump 94f. In the present embodiment, the first electrolyte solution is a mixed solution (KOH-KCL solution) of a potassium hydroxide aqueous solution as an absorbing liquid and a potassium chloride aqueous solution as an electrolyte solution.

An absorption reaction of the carbon dioxide-containing gas in the absorption tower 10 is represented by the following reaction formula (1).

KOH + CO₂ → KHCO₃ (1)

By the absorption reaction, the first electrolyte solution that has absorbed carbon dioxide (KHCO₃-KCL solution) is obtained. In the first electrolyte solution, carbon dioxide becomes hydrogen carbonate ions. The first electrolyte solution that has absorbed carbon dioxide (KHCO₃-KCL solution) is supplied to the concentration separation unit 20 via the second passage 602 at a predetermined flow rate by the driving of the pump 94a.

More specifically, carbon dioxide absorption reactions represented by the following reaction formulas (1-1) and (1-2) proceed, thereby the first electrolyte solution that has absorbed carbon dioxide (KHCO₃-KCL solution) is obtained.

2KOH + CO₂ → K₂CO₃ + H₂O (1-1)

K₂CO₃ + H₂O + CO₂ → 2KHCO₃ (1-2)

The first electrolyte solution may be an electrolyte solution in which potassium hydroxide (KOH) is completely reacted to potassium hydrogen carbonate (KHCO₃), or may be an electrolyte solution in which potassium carbonate (K₂CO₃), which is a product of the above reaction formula (1-1), is partially contained. The first electrolyte solution may be an electrolyte solution in which a large part of potassium hydroxide (KOH) is reacted to potassium carbonate (K₂CO₃), which is obtained by stopping the carbon dioxide absorption reaction in the above reaction formula (1-1). In the first electrolyte solution, carbon dioxide can form bicarbonate ions (HCO₃⁻).

In the concentration separation unit 20, the first electrolyte solution that has absorbed carbon dioxide (KHCO₃-KCL solution) is supplied from the third supply port 234 of the anode liquid chamber 231, and a hydrogen-containing gas is supplied from the first supply port 213 of the anode gas chamber 211. A voltage is applied from the power source 26 to the first anode 22 and the first cathode 24. The hydrogen-containing gas may contain only a mixed gas from the electrolytic reduction device 2, or may contain a combined gas obtained by combining a high-pressure hydrogen gas from the hydrogen storage unit 50 and the mixed gas. The hydrogen-containing gas contains hydrogen and a carbon compound. The hydrogen-containing gas is pressurized by the compression device 93b as necessary and supplied.

While the hydrogen-containing gas passes through the anode gas flow path 212, the hydrogen-containing gas is supplied from the anode gas diffusion layer 222 to the anode catalyst layer 221. As represented by the following reaction formula (2), in the anode catalyst layer 221 of the first anode 22, hydrogen molecules are separated into protons (H⁺) and electrons by an oxidation reaction.

H₂ → 2H⁺ + 2e⁻ (2)

Among components contained in the hydrogen-containing gas, hydrogen is consumed in the anode catalyst layer 221, and the carbon compound (components other than hydrogen) remains unreacted. A gas containing a carbon compound, that is, an exhaust gas from which hydrogen has been separated, is discharged from the first discharge port 214. The recovery unit 30 recovers the discharged exhaust gas.

The protons (H⁺) generated in the anode catalyst layer 221 transfer to the anode liquid chamber 231 adjacent to the first anode 22. Due to the protons (H⁺) supplied from the anode catalyst layer 221, the pH of the KHCO₃ solution in the anode liquid chamber 231 becomes lower than that before the oxidation reaction. The chemical equilibrium in the following reaction formula (3) is shifted to the right and carbon dioxide is generated.

HCO₃⁻ + H⁺ ↔ CO₂ + H₂O (3)

When carbon dioxide is released from the first electrolyte solution, the liquid in the anode liquid flow path 236 becomes a second electrolyte solution mainly composed of potassium chloride (KCL solution). The second electrolyte solution may slightly contain KHCO₃. A gas-liquid mixture of a concentrated carbon dioxide gas containing the generated carbon dioxide and the second electrolyte solution (KCL solution) is supplied to the gas-liquid separation unit 40 via the third discharge port 235 and the seventh passage 607.

In the gas-liquid separation unit 40, the concentrated carbon dioxide gas and the second electrolyte solution (KCL solution) are separated from each other. The concentrated carbon dioxide gas is supplied to the electrolytic reduction device 2 via the tenth passage 610. The second electrolyte solution (KCL solution) is supplied to the cathode liquid chamber 233 via the eighth passage 608 and the fourth supply port 237.

In the electrolyte membrane 232, potassium ions (K⁺) in the first electrolyte solution transfer to the cathode liquid chamber 233 through the inside of the electrolyte membrane 232 by electrodialysis.

Potassium ions (K⁺) in the second electrolyte solution (KCL solution) in the cathode liquid chamber 233 are increased by the potassium ions (K⁺) that have permeated the electrolyte membrane 232. With the increase of the potassium ions (K⁺), protons (H⁺) are supplied to the intermediate layer 28. In response to the consumption of the protons (H⁺), the pH of the second electrolyte solution (KCL solution) increases. As a result, the absorbing liquid (KOH) is regenerated. When the absorbing liquid is regenerated, the liquid in the cathode liquid flow path 239 becomes the first electrolyte solution containing the absorbing liquid and the electrolyte solution (KOH-KCL solution). The first electrolyte solution (KOH-KCL solution) is circulated and supplied to the absorption tower 10 via the fourth discharge port 238 and the ninth passage 609.

The protons (H⁺) supplied to the intermediate layer 28 are adsorbed by the catalyst layer 281 on the side of the first anode 22, and then supplied to the gas diffusion layer 282 as hydrogen molecules. The hydrogen molecules pass through the inside of the gas diffusion layer 282 and are converted into protons (H⁺) in the catalyst layer 281 on the side of the first cathode 24. The protons (H⁺) are supplied to the anode liquid chamber 231 of the adjacent electrolyte unit 23.

The same reaction occurs in each of the electrolyte units 23, thereby protons (H⁺) transfer from the side of the first anode 22 to the side of the first cathode 24, and are supplied to the first cathode 24.

The protons (H⁺) supplied to the first cathode 24 are adsorbed by the cathode catalyst layer 241. As represented by the following reaction formula (4), in the cathode catalyst layer 241, hydrogen molecules are generated again by a reduction reaction.

2H⁺ + 2e⁻ → H₂ (4)

A hydrogen gas generated in the first cathode 24 may be a hydrogen gas generated by a reduction reaction of water as represented by the following reaction formula (5). Water contained in the first electrolyte solution or the second electrolyte solution is reduced in the cathode catalyst layer 241, thereby a hydrogen gas can be generated.

2H₂O + 2e⁻ → H₂ + 2OH⁻ (5)

The pressure of the hydrogen gas generated in the first cathode 24 can be higher than that of the hydrogen-containing gas supplied to the first anode 22. The hydrogen gas generated in the first cathode 24 is a gas containing hydrogen and water, and a hydrogen gas comprising a hydrogen concentration of 99 vol% or more can be obtained by removing moisture. The hydrogen gas generated in the first cathode 24 is discharged from the second discharge port 253, and is stored in the hydrogen storage unit 50 in a state in which moisture is removed. Alternatively, the hydrogen gas generated in the first cathode 24 may be stored in the hydrogen storage unit 50 while containing moisture.

In the electrolytic reduction device 2, by electrolyzing the concentrated carbon dioxide gas together with water, a mixed gas containing a carbon compound derived from the concentrated carbon dioxide gas and hydrogen is generated.

The mixed gas is supplied to the concentration separation unit 20 via the fifth passage 605, the merge portion 70, and the fourth passage 604. In the concentration separation unit 20, the carbon compound and hydrogen are separated, and an exhaust gas containing the carbon compound is discharged.

In the carbon compound production system S, the total amount of the mixed gas generated in the electrolytic reduction device 2 is usually supplied to the concentration separation device 1 as a hydrogen-containing gas. The flow rate of the mixed gas may be appropriately adjusted by the control valve 95b. When the flow rate of the mixed gas discharged from the electrolytic reduction device 2 or the generation amount of the mixed gas in the electrolytic reduction device 2 is less than a predetermined value, a high-pressure hydrogen gas is added to the hydrogen-containing gas to increase the amount of hydrogen in the hydrogen-containing gas. The ratio between the mixed gas and the high-pressure hydrogen gas contained in the hydrogen-containing gas can be set on the basis of the hydrogen concentrations of the mixed gas and the high-pressure hydrogen gas, and the flow rate of the mixed gas. At the start of operation, a hydrogen-containing gas containing only a high-pressure hydrogen gas may be supplied to the concentration separation device 1.

In the carbon compound production system S, the flow paths of the first electrolyte solution and the second electrolyte solution can be switched on the basis of the pH value of the liquid flowing through the cathode liquid chamber 233. The pH value of the liquid may be, for example, the pH of the second electrolyte solution to be supplied to the cathode liquid chamber 233, the pH of the first electrolyte solution to be discharged from the cathode liquid chamber 233, or the like. When the pH value is less than a predetermined value, it is considered that a reaction in which the chemical equilibrium in the above reaction formula (3) is shifted to the right in the anode liquid chamber 231 does not sufficiently proceed.

When the pH value is equal to or more than the predetermined value, the second electrolyte solution discharged from the third discharge port 235 of the anode liquid chamber 231 is supplied to the cathode liquid chamber 233 via the seventh passage 607, the gas-liquid separation unit 40, and the eighth passage 608. Furthermore, when the pH value is equal to or more than the predetermined value, the first electrolyte solution discharged from the fourth discharge port 238 of the cathode liquid chamber 233 is supplied to the absorption tower 10 via the ninth passage 609, and carbon dioxide is absorbed again in the first electrolyte solution.

When the pH value is less than the predetermined value, the second electrolyte solution discharged from the third discharge port 235 of the anode liquid chamber 231 is supplied again to the anode liquid chamber 231 as the first electrolyte solution via the first bypass passage 612 and the second passage 602. Furthermore, when the pH value is less than the predetermined value, the first electrolyte solution discharged from the fourth discharge port 238 of the cathode liquid chamber 233 may be supplied again to the cathode liquid chamber 233 as the second electrolyte solution via the second bypass passage (not illustrated) and the eighth passage 608 in order to increase the pH value to the predetermined value or more.

The content of a control process executed by the control device 3 will be described. The control device 3 manages the operation state of the carbon compound production system S on the basis of the measured values of the current sensor 91, the liquid sensor 92, and the flow meter 96. For example, the control device 3 estimates the amount of hydrogen to be consumed in the concentration separation unit 20, the amount of carbon dioxide to be produced in the concentration separation unit 20, the amount of a mixed gas to be produced in the electrolytic reduction device 2, and the like on the basis of a current value of a DC power source that energizes the concentration separation unit 20 detected by the current sensor 91 and the amount of electricity obtained by integrating the current value.

The control device 3 may automatically control the driving of the compression device 93, the pump 94, and the control valve 95 on the basis of the estimated result. An example of the content of the automatic control will be described below.

The control device 3 adjusts the content and the supply amount of the hydrogen-containing gas to be supplied to the concentration separation unit 20 on the basis of the flow rate of the mixed gas discharged from the electrolytic reduction device 2 or the generation amount of the mixed gas in the electrolytic reduction device 2. The content and the supply amount of the hydrogen-containing gas may be adjusted by controlling the opening degrees of the control valves 95b and 95c. The content of the hydrogen-containing gas may be a mixing ratio between the mixed gas and the hydrogen gas. When the flow rate of the mixed gas discharged from the electrolytic reduction device 2 is less than a predetermined flow rate value, the control device 3 adds the high-pressure hydrogen gas in the hydrogen storage unit 50 corresponding to the shortage of the flow rate of the mixed gas.

The control device 3 switches the flow path of the first electrolyte solution to be discharged from the cathode liquid chamber 233 and the flow path of the second electrolyte solution to be discharged from the anode liquid chamber 231 on the basis of the pH value of the liquid flowing through the cathode liquid chamber 233. When the pH value is equal to or more than a predetermined value, the control device 3 causes the second electrolyte solution discharged from the anode liquid chamber 231 to be supplied to the cathode liquid chamber 233 without flowing through the first bypass passage 612. The control device 3 also causes the first electrolyte solution discharged from the cathode liquid chamber 233 to be supplied to the absorption tower 10. When the pH value is less than the predetermined value, the control device 3 causes the second electrolyte solution discharged from the anode liquid chamber 231 to flow through the first bypass passage 612 and to be supplied to the anode liquid chamber 231. The control device 3 also causes the first electrolyte solution discharged from the cathode liquid chamber 233 to flow through the second bypass passage (not illustrated) and to be supplied to the cathode liquid chamber 233.

In the above, the mixed gas is used as a hydrogen source. Alternatively, a hydrogen gas from a hydrogen source other than the mixed gas may be supplied to the concentration separation unit 20.

According to the above-described configuration, a concentrated carbon dioxide gas can be produced by the concentration separation unit 20 using an electrodialysis method by hydrogen pumping using a hydrogen-containing gas containing low-concentration hydrogen. For example, the voltage to be applied to the concentration separation unit 20 can be made lower than that in a method using water electrolysis, and the energy consumption can be decreased. Since a gas containing low-concentration hydrogen is used as a hydrogen source, the degree of freedom in selecting the hydrogen source is increased, and the degree of freedom in designing the system is increased.

Furthermore, according to the above-described configuration, since the intermediate layer 83 is provided, the voltage required for permeation of protons between the plurality of electrolyte units can be decreased as compared with the case where a bipolar membrane is used. This is because, when a bipolar membrane is used, it is necessary to apply a voltage at least enough to dissociate water, but, when the intermediate layer 83 is used, such application of a voltage becomes unnecessary. Specifically, this is because the voltage required in the intermediate layer 83 is the sum of the voltage required for the reaction in which protons are converted into hydrogen molecules and the voltage required for the reaction in which hydrogen molecules are converted into protons, and the sum of the voltages is much smaller than the voltage for dissociating water.

Since the hydrogen gas obtained by the concentration separation unit 20 or the mixed gas derived from the concentrated carbon dioxide gas can be used as a hydrogen raw material, the gas can be efficiently cycled in the system. Since the production of carbon dioxide and the separation of hydrogen from the reduced product are performed by the concentration separation unit 20, it is not necessary to separately provide a separation process of hydrogen, the operation efficiency can be improved, and the energy consumption can be further decreased. It is not necessary to separately provide the carbon dioxide production device and the separation device, and the system configuration is simplified.

By circulating and utilizing the mixed solution of the absorbing liquid and the electrolyte solution, the amount of energy required for absorbing and releasing carbon dioxide can be decreased, and the operation efficiency can be improved. By stacking the electrolyte units 23 using the intermediate layer 28 including the gas diffusion layer 282 supporting the catalyst layers 281 on both surfaces, for example, the voltage required for permeation of hydrogen ions between the electrolyte units 23 can be decreased as compared with the case where a bipolar membrane is used.

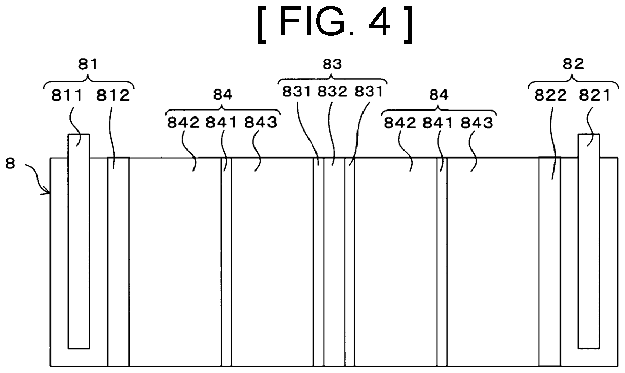

The electrochemical cell can be applied to uses other than the concentration separation device. The electrochemical cell may be applied to, for example, an electrodialysis device. FIG. 4 is a diagram illustrating a configuration example of an electrodialysis device 8 to which the electrochemical cell is applied.

The electrodialysis device 8 includes an anode chamber 81 that generates protons, a cathode chamber 82 that generates hydroxide ions, and a plurality of electrolyte units 84 laminated between the anode chamber 81 and the cathode chamber 82 with an intermediate layer 83 interposed therebetween.

The anode chamber 81 includes a second anode 811 and a first bipolar membrane 812. The cathode chamber 82 includes a second cathode 821 and a second bipolar membrane 822. The anode chamber 81 and the cathode chamber 82 include an electrolyte solution such as a sodium hydroxide solution or a sodium sulfide solution. The first bipolar membrane 812 and the second bipolar membrane 822 are provided to generate protons and hydroxide ions by dissociation of water.

The intermediate layer 83 includes a gas diffusion layer 832 including catalyst layers 831 on both surfaces. The electrolyte unit 84 includes an electrolyte membrane 841 that is a cation exchange membrane, an acid chamber 842, and an alkali chamber 843. The acid chamber 842 is arranged on the side of the anode chamber 81 and the alkali chamber 843 is arranged on the side of the cathode chamber 82 with the electrolyte membrane 841 interposed therebetween. In the acid chamber 842, a desalination chamber may be further arranged on the side of the cathode chamber 82 via an anion exchange membrane. An aqueous solution containing, for example, an inorganic salt, an organic acid salt, or an amino acid salt is supplied as an electrolyte solution to the acid chamber 842 or the desalination chamber. Water is supplied to the alkali chamber 843.

When a voltage is applied to the electrodialysis device 8 from a power source (not illustrated), an acid solution containing a predetermined acid is generated in the acid chamber 842 and an alkali solution containing a predetermined alkali is generated in the alkali chamber 843 by electrodialysis. When a voltage is applied to the electrodialysis device 8, protons are generated on the side of a cation exchange layer of the first bipolar membrane 812 of the anode chamber 81, and the protons transfer to the adjacent acid chamber 842. By the transfer of the protons, the pH of the acid chamber 842 is lowered, and an organic acid is generated. In the electrolyte membrane 841, cations in the acid chamber 842 transfer to the alkali chamber 843 through the inside of the electrolyte membrane 841 by electrodialysis. This transfer increases the number of cations in the alkali chamber 843, and with this increase, protons are supplied to the intermediate layer 83. An alkaline aqueous solution is generated in the alkali chamber 843 in response to the consumption of the protons.

The protons supplied to the intermediate layer 83 are reduced and converted into hydrogen molecules in the catalyst layer 831 on the side of the anode chamber 81 (the catalyst layer 831 in contact with the alkali chamber 843), transfer as a hydrogen gas inside the gas diffusion layer 832 by diffusion, are converted into protons in the catalyst layer 831 on the side of the cathode chamber 82 (the catalyst layer 831 in contact with the acid chamber 842), and are supplied to the acid chamber 842 of the adjacent electrolyte unit 84 by the above-described mechanism. When the desalination chamber (not illustrated) is provided, an organic acid salt aqueous solution is supplied to the desalination chamber, and water is supplied to the acid chamber 842 and the alkali chamber 843. In this case, when a voltage is applied to the electrodialysis device 8, cations of the organic acid salt aqueous solution in the desalination chamber transfer to the alkali chamber 843 through the electrolyte membrane 841 and anions transfer to the acid chamber 842 through the anion exchange membrane (not illustrated) by electrodialysis, and as a result, the acid solution is concentrated in the acid chamber 842 and the alkali solution is concentrated in the alkali chamber 843.

In the electrodialysis device 8, an anion exchange membrane can also be used as the electrolyte membrane 841 of the electrolyte unit 84. When the anion exchange membrane is used as the electrolyte membrane 841, an aqueous solution containing, for example, an inorganic salt, an organic acid salt, or an amino acid salt is supplied as an electrolyte solution to the alkali chamber 843. Water is supplied to the acid chamber 842. In this case, when a voltage is applied to the electrodialysis device 8, protons are generated on the side of the cation exchange layer of the first bipolar membrane 812 of the anode chamber 81, the protons transfer to the adjacent acid chamber 842, hydroxide ions are generated on the side of the anion exchange membrane of the second bipolar membrane 822 of the cathode chamber 82, and the hydroxide ions transfer to the adjacent alkali chamber 843. In the intermediate layer 83, the protons supplied from the adjacent alkali chamber 843 are once converted into hydrogen molecules in the catalyst layer 831 in contact with the alkali chamber 843, then converted into protons again in the catalyst layer 831 in contact with the acid chamber 842, and supplied to the acid chamber 842 of the adjacent electrolyte unit 84 by a mechanism same as the above-described mechanism. Then, anions in the alkali chamber 843 transfer to the acid chamber 842 through the inside of the electrolyte membrane 841 by electrodialysis. By these transfers, an acidic aqueous solution is generated in the acid chamber, and an alkaline aqueous solution is generated in the alkali chamber 843.

Moreover, when the electrochemical cell of the present disclosure is applied to a carbon dioxide production device that produces high-concentration carbon dioxide, the example of the concentration separation unit 20 includes the first anode 22 and the first cathode 24, but an anode chamber that generates protons and a cathode chamber that generates hydroxide ions may be provided instead of the first anode 22 and the first cathode 24, respectively. Even in such an aspect, carbon dioxide can be desorbed from a liquid that has absorbed carbon dioxide.

Furthermore, when the electrochemical cell of the present disclosure is applied to an electrodialysis device, the configuration including the anode chamber 81 and the cathode chamber 82 is adopted as described using the electrodialysis device 8, but a first anode that generates protons and a first cathode that reduces protons may be provided instead of the anode chamber 81 and the cathode chamber 82, respectively. Even in such an aspect, a liquid having a desired component can be generated in an acid chamber, an alkali chamber, or a desalination chamber by an electrodialysis action.

The embodiment disclosed herein is illustrative in all respects and it is ought to be understood not restrictive. The technical features described in the embodiments can be combined with each other, and the scope of the present invention is intended to include all modifications within the scope of the claims and a scope equivalent to the scope of the claims.

The sequence illustrated in each embodiment is not limited, and each processing procedure may be executed by changing the order thereof as long as there is no internal contradiction, or a plurality of processes may be executed in parallel. The processing subject of each process is not limited, and the process of each device may be executed by an other device as long as there is no internal contradiction.

The matters described in the embodiments can be combined with each other. Furthermore, the independent claims and the dependent claims recited in the scope of the claims can be combined with each other in any combination, regardless of the citation form. Furthermore, a form (multi-claim form) in which a claim citing two or more other claims is recited is used in the scope of the claims, but the present invention is not limited thereto. The present invention may be described by using a form of reciting a multi-claim (multi-multi-claim) in which at least one multi-claim is cited.

### DESCRIPTION OF REFERENCE NUMERALS

S Carbon compound production system
1 Concentration separation device
2 Electrolytic reduction device
3 Control device
10 Absorption tower
20 Concentration unit
21 Anode plate
211 Anode gas chamber
212 Anode gas flow path
213 First supply port
214 First discharge port
22 First anode
221 Anode catalyst layer
222 Anode gas diffusion layer
23 Electrolyte unit
231 Anode liquid chamber
232 Electrolyte membrane
233 Cathode liquid chamber
24 First cathode
241 Cathode catalyst layer
242 Cathode gas diffusion layer
25 Cathode plate
251 Cathode gas chamber
252 Cathode gas flow path
253 Second discharge port
26 Power source
28 Intermediate layer
281 Catalyst layer
282 Gas diffusion layer
283 Sixth discharge port
284 Valve
30 Recovery unit
40 Gas-liquid separation unit
50 Hydrogen storage unit
70 Merge portion

## Claims

1. An electrochemical cell comprising:
a first anode or an anode chamber configured to generate protons;
a first cathode or a cathode chamber, the cathode chamber being configured to generate hydroxide ions; and
a plurality of electrolyte units disposed between the first anode or the anode chamber and the first cathode or the cathode chamber, wherein
each of the plurality of electrolyte units includes
an electrolyte membrane, and
a first liquid chamber arranged on a side of the first anode or the anode chamber and a second liquid chamber arranged on a side of the first cathode or the cathode chamber with the electrolyte membrane interposed therebetween,
the plurality of electrolyte units are arranged with a porous conductive layer interposed therebetween, and
the porous conductive layer is provided with a catalyst layer on both surfaces.

2. The electrochemical cell according to claim 1, wherein
the first anode configured to generate protons from hydrogen, and
the first cathode configured to generate hydrogen from protons.

3. The electrochemical cell according to claim 1 or 2, wherein
the first liquid chamber is configured to be supplied with a first electrolyte solution in which carbon dioxide is absorbed, and
the second liquid chamber is configured to be supplied with a second electrolyte solution.

4. The electrochemical cell according to claim 1 or 2, wherein
the anode chamber includes a second anode, an electrolyte solution, and a first bipolar membrane, and
the cathode chamber includes a second cathode, an electrolyte solution, and a second bipolar membrane.

5. The electrochemical cell according to claim 4, wherein
one of the first liquid chamber and the second liquid chamber is configured to be supplied with an electrolyte solution containing an inorganic salt, an organic acid salt, or an amino acid salt.

6. The electrochemical cell according to claim 1 or 2, wherein
at least one of the porous conductive layer or the catalyst layer provided on the both surfaces of the porous conductive layer is subjected to water repellent treatment.

7. The electrochemical cell according to claim 1 or 2, wherein
the catalyst layer contains catalytic particles supported on the surfaces of the porous conductive layer.

8. The electrochemical cell according to claim 1 or 2, wherein
the porous conductive layer includes a discharge port for a liquid.

9. The electrochemical cell according to claim 8, comprising
a flow path configured to allow a liquid discharged from the discharge port to flow therethrough and a valve for opening and closing the flow path.
